(19) Europäisches Patentamt
European Patent Office
Office européen des brevets

(11) **EP 3 388 794 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**09.03.2022   Patentblatt 2022/10**

(45) Hinweis auf die Patenterteilung:
**06.03.2019   Patentblatt 2019/10**

(21) Anmeldenummer: **17166569.8**

(22) Anmeldetag: **13.04.2017**

(51) Internationale Patentklassifikation (IPC):
**G01F 1/66** $^{(2022.01)}$       **G01F 15/18** $^{(2006.01)}$

(52) Gemeinsame Patentklassifikation (CPC):
**G01F 1/662; G01F 15/185;** G01F 1/667

(54) **MESSVORRICHTUNG ZUM MESSEN EINER DURCHFLUSSGESCHWINDIGKEIT EINES FLUIDS**

MEASURING DEVICE FOR MEASURING A FLOW SPEED OF A FLUID

DISPOSITIF DE MESURE DU DÉBIT DESTINÉ À MESURER LE DÉBIT D'UN FLUIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**17.10.2018   Patentblatt 2018/42**

(73) Patentinhaber: **SICK Engineering GmbH**
**01458 Ottendorf-Okrilla (DE)**

(72) Erfinder:
• **Starke, Dr. Eric**
  **01796 Pirna (DE)**
• **Schulz, Dr. Christian**
  **01069 Dresden (DE)**
• **Künzelmann, Dr. Mario**
  **01187 Dresden (DE)**

(74) Vertreter: **Ludewigt, Christoph**
**Sick AG**
**Intellectual Property**
**Erwin-Sick-Strasse 1**
**79183 Waldkirch (DE)**

(56) Entgegenhaltungen:
**JP-B2- 2 895 704**

• **TOVE LARSEN: "Superelliptic Broadband Transition Between Rectangular and Circular Waveguides", MICROWAVE CONFERENCE, 1969. 1ST EUROPEAN, IEEE, PISCATAWAY, NJ, USA, 8. September 1969 (1969-09-08), Seiten 277-280, XP031601208,**

EP 3 388 794 B2

**Beschreibung**

Die Erfindung betrifft eine Messvorrichtung zum Messen einer Durchflussgeschwindigkeit eines Fluids, das in einer kreisförmigen Leitung mit einer Hauptströmungsrichtung strömt, gemäß dem Oberbegriff des Anspruchs 1.

Um die Durchflussgeschwindigkeit des Fluids in der Leitung, vorzugsweise einem kreisrunden Rohr, zu bestimmen, gibt es neben verschiedenen physikalischen Prinzipien den Einsatz von Ultraschallwellen, die in die Leitung ausgesendet werden. Mittels des Differenzlaufzeitverfahrens kann die Durchflussgeschwindigkeit des strömenden Fluids und somit der Strömung bestimmt werden.

Hierbei werden Ultraschallwellen von einem Paar Ultraschalleinrichtungen, insbesondere Ultraschallwandlern, ausgesandt und empfangen, wobei die Ultraschalleinrichtungen einander gegenüber an einer Wandung der Leitung an den Enden eines Messpfads schräg zur Hauptströmungsrichtung bzw. Strömung des Fluids angeordnet sind.

Die durch das Fluid transportierten Ultraschallwellen werden in Strömungsrichtung beschleunigt und gegen die Strömungsrichtung abgebremst. Die resultierende Laufzeitdifferenz wird mit geometrischen Größen zu einer mittleren Fluidgeschwindigkeit verrechnet, aus der die Durchflussgeschwindigkeit des strömenden Fluids bestimmt wird.

Ein wichtiges und anspruchsvolles Anwendungsfeld sind Gaszähler für Erdgaspipelines, in denen, wegen der immensen beförderten Gasmengen und des Rohstoffwerts, schon geringste Abweichungen in der Messgenauigkeit zu deutlich merklichen Werteunterschieden, wie beispielsweise zwischen tatsächlich beförderten und gemessenen Mengen, führen können. Dies führt zu hohen monetären Differenzen. Oben genannte Messvorrichtungen werden in diesem Bereich der Großgasmengenmessung auf Grund ihrer Genauigkeit, Wartungsfreiheit und Selbstdiagnosemöglichkeiten bei Gastransport und Gaslagerung zunehmend eingesetzt.

Da ein Ultraschallmesspfad die Strömungsgeschwindigkeit nur an definierten Positionen abtastet, wird letztlich die mittlere Strömungsgeschwindigkeit über den gesamten Strömungsquerschnitt angenähert. Hohe Genauigkeiten lassen sich daher nur erzielen, wenn die Strömung gut reproduzierbar ist, beziehungsweise ein ungestörtes Strömungsprofil aufweist oder wenn eine Vielzahl von Messpfaden die Unregelmäßigkeiten aufzulösen vermag.

Beim Einsatz einer Vielzahl von Messpfaden an kreisrunden Leitungen bzw. Rohren können die Ultraschalleinrichtungen an der Wandung der kreisrunden Leitungen nur so angeordnet werden, dass sich diametrale Messpfade ergeben. Das heißt, die Messpfade kreuzen sich im Rohrmittelpunkt, so dass die Messung stets durch den Rohrmittelpunkt erfolgt. Hierdurch durchläuft ein Messsignal einen am stärksten mit Geschwindigkeitsgradienten behafteten Strömungsquerschnitt, da eine Geschwindigkeitsverteilung des Fluids in einer kreisrunden Leitung bei einer laminaren Strömung eine Parabel ist. Dadurch kann das Messsignal nur einen ungenauen Mittelwert der Strömungsgeschwindigkeit liefern.

Aus diesem Grund sind nicht runde Strömungsquerschnitte in einem Messabschnitt der Messvorrichtung zur besseren Abtastung des Strömungsprofils interessant.

DE 10 2012 111 757 A1, JP 2 895 704 B2 oder DE 198 23 165 A1 offenbaren jeweils eine Ultraschall-Durchflussmessvorrichtung mit den Merkmalen des Oberbegriffs des Anspruchs 1.

Es ist daher eine Aufgabe der Erfindung, eine Messvorrichtung zum Messen einer Durchflussgeschwindigkeit eines Fluids zur Verfügung zu stellen, die eine erhöhte Messqualität der Durchflussgeschwindigkeit ermöglicht.

Die Aufgabe wird erfindungsgemäß durch eine Messvorrichtung mit den Merkmalen des Anspruchs 1 gelöst.

Hierbei umfasst die erfindungsgemäße Messvorrichtung zum Messen einer Durchflussgeschwindigkeit eines Fluids, das in einer kreisförmigen Leitung mit einer Hauptströmungsrichtung strömt, einen Eingangsabschnitt zum Leiten des Fluids aus der kreisförmigen Leitung in die Messvorrichtung; einen Ausgangsabschnitt zum Leiten des Fluids aus der Messvorrichtung in die kreisförmige Leitung; einen Messabschnitt zum Verbinden des Eingangsabschnitts mit dem Ausgangsabschnitt; zumindest eine Ultraschalleinrichtung zum Aussenden und/oder Empfangen von Ultraschallwellen, wobei die Ultraschalleinrichtung an einer Wandung des Messabschnitts angeordnet ist; und eine Auswerteeinheit zum Durchführen einer Laufzeitdifferenzmessung und zum Bestimmen der Durchflussgeschwindigkeit, wobei der Messabschnitt eine rechteckige Form, insbesondere mit abgerundeten Ecken, aufweist, und wobei der Eingangsabschnitt eine erste superelliptische Übergangsform und der Ausgangsabschnitt eine zweite superelliptische Übergangsform aufweisen, und wobei die superelliptische Übergangsform mittels einer Formel

$$\left(\frac{x}{a_{(z)}}\right)^{n_{(z)}} + \left(\frac{y}{b_{(z)}}\right)^{n_{(z)}} = 1$$

beschrieben, wobei die Halbachsen a(z) und b(z) sowie der Exponent n(z) jeweils Funktionen der in die Hauptströmungsrichtung zeigenden Zählerachse z sind, und wobei die Werte von a(z), b(z) und n(z) kontinuierlich als Funktion der Zählerachse z geändert werden, so dass die superelliptische Übergangsform erzielbar ist.

Hierdurch ergibt sich der Vorteil, dass eine besonders homogene Übergangsgeometrie von der kreisrunden Leitung zu dem rechteckigen Messabschnitt, insbesondere mit abgerundeten Ecken, der erfindungsgemäßen Messvorrichtung für eine laminare Strömung möglich ist, so dass eine geringe Baulänge der erfindungsgemäßen Messvorrichtung bei einer gleichzeitig vergleichmäßigten Strömung gestaltet werden kann.

Gemäß einem bevorzugten Ausführungsbeispiel ist die erfindungsgemäße Messvorrichtung in der kreisförmigen Leitung koaxial zu der Hauptströmung des Fluids angeordnet.

Vorteilhafterweise geht die erste superelliptische Übergangsform des Eingangsabschnitts von einem runden Querschnitt, der dem Querschnitt der kreisrunden Leitung entspricht, auf einen rechteckigen Querschnitt, insbesondere mit abgerundeten Ecken, der die rechteckige Form des Messabschnitts entspricht, über, so dass sich kein Strömungsabriss beim Übergang des Fluids von der kreisrunden Leitung auf den rechteckigen Messabschnitt, insbesondere mit abgerundeten Ecken, der erfindungsgemäßen Messvorrichtung ergibt.

Ferner geht die zweite superelliptische Übergangsform des Ausgangsabschnitts der erfindungsgemäßen Messvorrichtung vorteilhafterweise von einem rechteckigen Querschnitt, insbesondere mit abgerundeten Ecken, der die rechteckige Form des Messabschnitts entspricht, auf einen runden Querschnitt, der dem Querschnitt der kreisrunden Leitung entspricht, über, so dass sich keine Verwirbelung am Ausgang der erfindungsgemäßen Messvorrichtung ergibt.

x und y sind die räumlichen Koordinaten senkrecht zur Zählerachse z. Insbesondere ist in einem kreisrunden Flanschabschnitt der Exponent $n(Flansch) = 2$ und die Halbachsen $a(z)$ *und* $b(z)$ sind gleich einem Radius des Flansches - $a(Flansch) = b(Flansch) = R$. Im Bereich des rechteckigen Messabschnittes, insbesondere mit abgerundeten Ecken, ist vorzugsweise der Wert für $n(Messabschnitt)$ größer als 2. Für eine gute Näherung eines rechteckigen Messabschnittes sind Werte von n(Messabschnitt) größer als 5 vorteilhaft. Das Verhältnis der Halbachsen a und b zueinander definiert das Querschnittsverhältnis des Messabschnittes. Insbesondere sind typi-sche Werte

$$\frac{a(Messabschnitt)}{b(Messabschnitt)} = [0{,}1 \ldots 10]$$

. Im Eingangs- bzw. Ausgangsabschnitt zwischen den Flanschabschnitten und dem Messabschnitt werden die Werte der Halbachsen a(z) und b(z) und des Exponenten n(z) kontinuierlich als Funktion der Zählerachse z geändert, wodurch große Gradienten in der Konturänderung der Übergangsform ausgeschlossen werden können.

Weiterhin ist gemäß einem weiteren bevorzugten Ausführungsbeispiel die Ultraschalleinrichtung an der Wandung des rechteckigen Messabschnitts, insbesondere mit abgerundeten Ecken, der erfindungsgemäßen Messvorrichtung derart angeordnet, dass zumindest ein Messpfad der Ultraschalleinrichtung annähernd parallel zu einer Seitenwand des rechteckigen Messabschnitts, insbesondere mit abgerundeten Ecken, gerichtet ist. Das heißt, der Messpfad ist derart ausgebildet, dass er entlang der Zählerachse z in der Hauptströmungsrichtung geneigt ist und im Grunde parallel zu der Seitenwand des Messabschnitts ist.

Vorteilhafterweise ist die Ultraschalleinrichtung an der Wandung des rechteckigen Messabschnitts, insbesondere mit abgerundeten Ecken, derart angeordnet, dass sich eine sekante Messpfadausrichtung in dem rechteckigen Messabschnitt, insbesondere mit abgerundeten Ecken, ergibt. Hierdurch durchläuft das Messsignal nicht den am stärksten mit Geschwindigkeitsgradienten behafteten Strömungsquerschnitt, so dass eine verbesserte Abtastdichte des Strömungsprofils zur genaueren Mittelwertbildung der Strömungsgeschwindigkeit führen kann.

Bevorzugte Ausgestaltungen und Weiterbildungen sowie weitere Vorteile der Erfindung sind den Unteransprüchen, der nachfolgenden Beschreibung und den Zeichnungen zu entnehmen.

Im Folgenden wird die Erfindung anhand von Ausführungsbeispielen unter Bezugnahme auf die Zeichnungen im Einzelnen erläutert. In der Zeichnung zeigen:

Fig. 1     eine schematische 3D-Darstellung einer erfindungsgemäßen Messvorrichtung;

Fig. 2     eine schematische Seitenansicht der erfindungsgemäßen Messvorrichtung gemäß der Figur 1;

Fig. 3A    eine schematische Schnittansicht entlang einer Schnittlinie A-A in der Figur 2; und

Fig. 3B    eine schematische Schnittansicht entlang einer Schnittlinie B-B in der Figur 2.

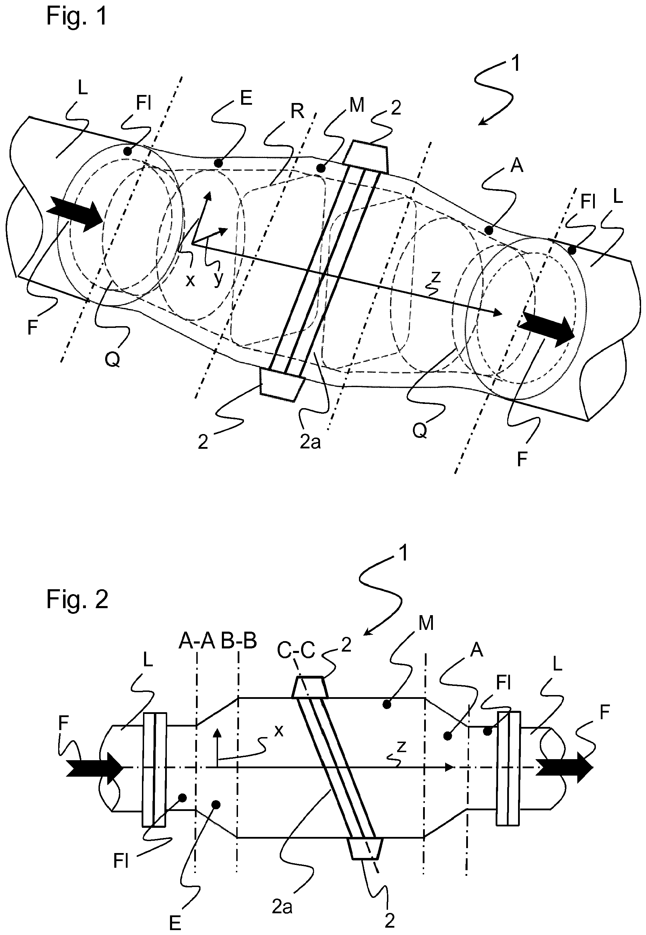

In der Figur 1 ist eine schematische 3D-Darstellung eines bevorzugten Ausführungsbeispiels einer erfindungsgemäßen Messvorrichtung 1 gezeigt, die eine Durchflussgeschwindigkeit eines Fluids F misst, das in einer kreisförmigen Leitung L mit einer Hauptströmungsrichtung strömt. Das Fluid F kann beispielsweise Erdgas, Erdöl oder Ähnliches umfassen.

Hierbei ist die Messvorrichtung 1 koaxial zu der Hauptströmung des Fluids F in der kreisförmigen Leitung L angeordnet.

Die Messvorrichtung 1 umfasst einen Flanschabschnitt Fl, der die Messvorrichtung 1 mit der kreisförmigen Leitung L verbindet und das Fluid F aus der kreisförmigen Leitung L in die Messvorrichtung 1 leitet.

An dem Flanschabschnitt Fl schließt sich ein Eingangsabschnitt E der Messvorrichtung 1 an, der eine erste superelliptische Übergangsform aufweist, die sich von einem Anfang des Eingangsabschnitts E bis zu einem Messabschnitt M der Messvorrichtung 1 erstreckt. Hierbei geht die erste superelliptische Übergangsform von einem runden Querschnitt Q des Flanschabschnitts Fl auf einen rechteckigen Querschnitt R über, wobei im Folgenden unter "rechteckigen" Querschnitt R verstanden wird, dass der Querschnitt R vorzugsweise eine rechteckige Form mit annähernd parallelen Kanten zueinander und abgerundeten Ecken aufweist. Das heißt insbesondere, dass der Querschnitt R optisch gerade parallele Kanten aufweist.

Der Messabschnitt M der Messvorrichtung 1 weist eine rechteckige Form auf, die den rechteckigen Querschnitt R aufweist, wobei innerhalb des Messabschnitts M der Messvorrichtung 1 die Durchflussgeschwindigkeit des Fluids F gemessen wird. An dem Messabschnitt M der Messvorrichtung 1 schließt sich ein Ausgangsabschnitt A der Messvorrichtung 1 an, wobei an dem Ausgangsabschnitt A sich ein Flanschabschnitt Fl anschließt, der das Fluid F, dessen Durchflussgeschwindigkeit in dem Messabschnitt M der Messvorrichtung 1 bestimmt ist, aus der Messvorrichtung 1 in die kreisförmige Leitung L zurückleitet. Das heißt, der Messabschnitt M der Messvorrichtung 1 verbindet den Eingangsabschnitt E mit dem Ausgangsabschnitt A der Messvorrichtung 1.

Der Ausgangsabschnitt A der Messvorrichtung 1 weist eine zweite superelliptische Übergangsform auf, die sich von dem rechteckigen Messabschnitt M der Messvorrichtung 1 bis zu einem Ende der Messvorrichtung 1 erstreckt und mit der kreisförmigen Leitung L in Verbindung steht. Hierbei geht die zweite superelliptische Übergangsform von dem rechteckigen Querschnitt R auf den runden Querschnitt Q über, der einem runden Querschnitt der kreisförmigen Leitung L entspricht.

Die Übergangsform bedeutet im Sinne der Erfindung die konstruktive Ausgestaltung der Form des Eingangs- bzw. Ausgangsabschnitts E bzw. A der Messvorrichtung 1. Die Form entspricht nicht üblicherweise einem hohlen Kegelstumpf, sondern einem superelliptischen hohlen Stumpf.

Die superelliptische Übergangsform ist erfindungsgemäß mittels einer Formel

$$\left(\frac{x}{a_{(z)}}\right)^{n_{(z)}} + \left(\frac{y}{b_{(z)}}\right)^{n_{(z)}} = 1$$

beschrieben, wobei a(z) und b(z) Halbachsen der superelliptischen Übergangsform darstellen. Die Halbachsen a(z) und b(z) sind Funktionen der in die Hauptströmungsrichtung zeigenden Zählerachse z, wobei x und y die räumlichen Koordinaten senkrecht zur Zählerachse z sind. Der Exponent n(z) ist ebenfalls eine Funktion der in die Hauptströmungsrichtung zeigenden Zählerachse z. Hierbei sind unter Halbachsen a(z) und b(z) die charakteristischen Radien der Superellipse zu verstehen. Das heißt, mit fortschreitender Betrachtung der Form der Messvorrichtung 1 entlang der Zählerachse z in der Hauptströmungsrichtung ändern sich die Werte der Halbachsen a(z) und b(z) sowie des Exponenten n(z) kontinuierlich vom Anfang des Eingangsabschnitts E bis Ende des Ausgangsabschnitts A.

Insbesondere im kreisrunden Flanschabschnitt Fl der Messvorrichtung 1 ist der Exponent n(z) gleich 2 und die Halbachsen a(z) und b(z) sind gleich dem Radius des Flansches. Im Bereich des annähernd rechteckigen Messabschnitts M ist der Wert für den Exponent n(z) größer als 2, wobei für eine gute Näherung eines rechteckigen Messabschnitts M Werte von n größer als 5 vorteilhaft sind. Das Verhältnis der Halbachsen a(z) und b(z) zueinander definiert das Querschnittsverhältnis des Messabschnittes M. Typische Werte sind

$$\frac{a(Messabschnitt)}{b(Messabschnitt)} = [0,1 \dots 10]$$

.

Mit anderen Worten, im Eingangs- und Ausgangsabschnitt E und A zwischen Flanschabschnitt Fl und Messabschnitt M werden die Werte der Halbachsen a(z) und b(z) und des Exponenten n(z) kontinuierlich als Funktion der Zählerachse z geändert, so dass die superelliptische Übergangsform der Messvorrichtung 1 erzielbar ist.

An einer Wandung des Messabschnitts M der Messvorrichtung 1 ist zumindest eine Ultraschalleinrichtung 2 angeordnet, die Ultraschall aussendet und/oder empfängt, so dass anhand eines Messsignals der Ultraschalleinrichtung 2 eine nicht dargestellte Auswerteeinheit die Durchflussgeschwindigkeit des Fluids F bestimmt. Hierbei führt die Auswerteeinheit die Bestimmung der Durchflussgeschwindigkeit mittels einer Laufzeitdifferenzmessung durch.

Wie in der schematischen Seitenansicht in der Figur 2 gezeigt, ermöglicht der rechteckige Messabschnitt M der Messvorrichtung 1 eine Anordnung der Ultraschalleinrichtung 2 an der Wandung derart, dass zumindest ein Messpfad 2a der Ultraschalleinrichtung 2 parallel zu einer Seitenwand des rechteckigen Messabschnitts M der Messvorrichtung 1 gerichtet ist. Insbesondere ergibt sich eine sekante Messpfadausrichtung der Ultraschalleinrichtung 2 in dem rechteckigen Messabschnitt M der Messvorrichtung 1, so dass das Messsignal der Messvorrichtung 1 über das gesamte Strömungsprofil des Fluids F erfasst werden kann. Das heißt, der Messpfad 2a ist entlang der Zählerachse z geneigt zu der Hauptströmungsrichtung F und parallel zu der Seitenwand des rechteckigen Messabschnitts M mit abgerundeten Ecken, wobei von der Seitenwand die Rede ist, an die die Ultrschalleinrichtung 2 nicht angebracht ist.

Mit anderen Worten, der Messpfad bzw. die Messpfade 2a der Ultraschalleinrichtung 2 können parallel zueinander ausgerichtet sein und kreuzen sich nicht im Mittelpunkt der kreisförmigen Leitung L. Dies ermöglicht eine bessere Abtastung des Strömungsprofils des Fluids F und damit einen genaueren Wert der Durchflussgeschwindigkeit des Fluids F.

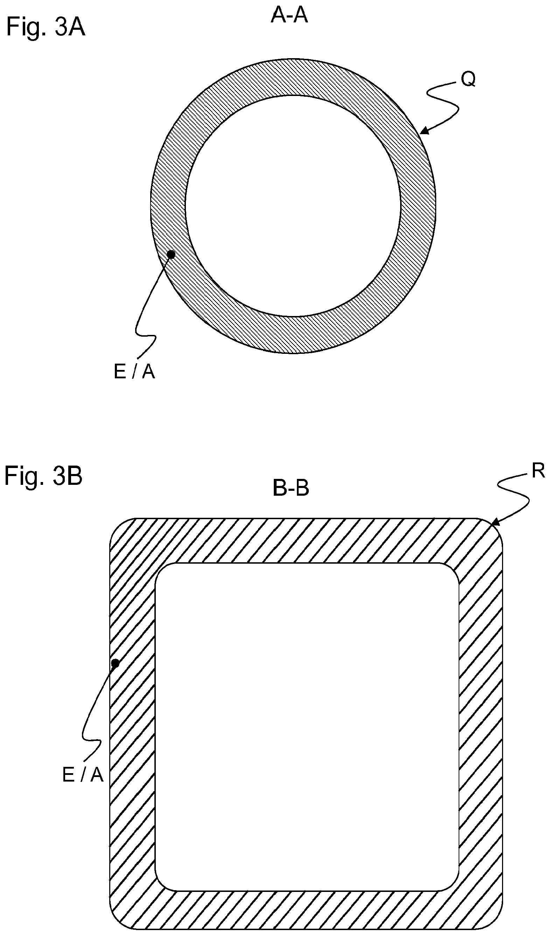

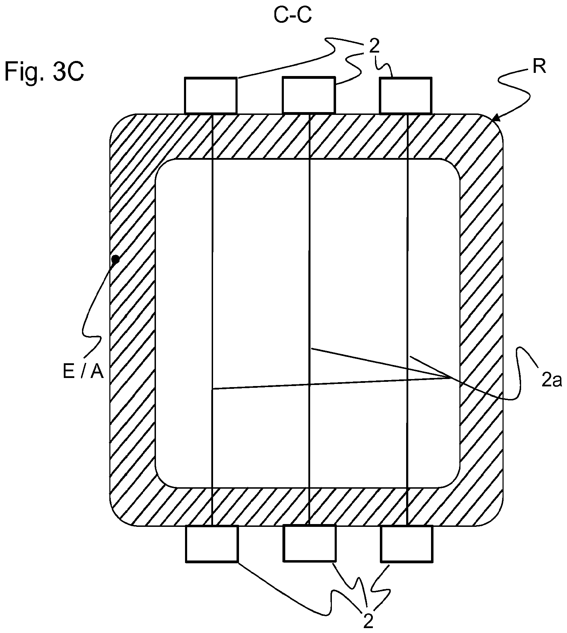

Die schematischen Schnittansichten in den Figuren 3A und 3B verdeutlichen die konstruktive Ausgestaltung der erfindungsgemäßen Messvorrichtung 1. Die Figur 3A zeigt die schematische Schnittansicht des Eingangsabschnitts E der Messvorrichtung 1 entlang der Schnittlinie A-A. Der Querschnitt Q des Eingangsabschnitts E an dieser Stelle ist kreisförmig rund und entspricht im Wesentlichen dem Querschnitt der kreisförmigen Leitung L.

Ab dieser Stelle weist der Eingangsabschnitt E der Messvorrichtung 1 die erste superelliptische Übergangsform auf, so dass am Ende des Eingangsabschnitts E und am Übergang des Eingangsabschnitts E zu dem Messabschnitt M der Messvorrichtung 1 die erste superelliptische Übergangsform den rechteckigen Querschnitt R, wie in der Figur 3B gezeigt, aufweist. Hierdurch ist ein homogener Übergang mit gleichbleibender Querschnittfläche über die gesamte Strömungsstrecke der Messvorrichtung 1 gewährleistet, so dass eine Verwirbelung im Strömungsprofil des Fluids F, insbesondere innerhalb des Messabschnitts M der Messvorrichtung 1, ausbleibt. Das heißt, es entsteht kein Strömungsabriss im Strömungsprofil des Fluids F am Übergang des Fluids F von der kreisförmigen Leitung L in dem Messabschnitt M der Messvorrichtung 1.

Der Messabschnitt M der Messvorrichtung 1 behält den rechteckigen Querschnitt R bis zum Anschluss an dem Ausgangsabschnitt A der Messvorrichtung 1 bei. Der Ausgangsabschnitt A der Messvorrichtung 1 beginnt mit dem rechteckigen Querschnitt R und weist die zweite superelliptische Übergangsform auf, so dass am Ende des Ausgangsabschnitts A der Messvorrichtung der runde Querschnitt Q wieder vorliegt, der dem runden Querschnitt Q der kreisförmigen Leitung L entspricht.

Hierdurch wird entlang der gesamten erfindungsgemäßen Messvorrichtung 1 ein Strömungsabriss des Fluids F vermieden, so dass eine erhöhte Messqualität der Durchflussgeschwindigkeit des Fluids F erzielt werden kann.

## Patentansprüche

1. Messvorrichtung (1) zum Messen einer Durchflussgeschwindigkeit eines Fluids (F), das in einer kreisförmigen Leitung (L) mit einer Hauptströmungsrichtung strömt, umfassend

    einen Eingangsabschnitt (E) zum Leiten des Fluids aus der kreisförmigen Leitung (L) in die Messvorrichtung (1);

    einen Ausgangsabschnitt (A) zum Leiten des Fluids aus der Messvorrichtung (1) in die kreisförmige Leitung (L);

    einen Messabschnitt (M) zum Verbinden des Eingangsabschnitts (E) mit dem Ausgangsabschnitt (A);

    zumindest eine Ultraschalleinrichtung (2) zum Aussenden und/oder Empfangen von Ultraschallwellen, wobei die Ultraschalleinrichtung (2) an einer Wandung des Messabschnitts (M) angeordnet ist; und

    eine Auswerteeinheit zum Durchführen einer Laufzeitdifferenzmessung und zum Bestimmen der Durchflussgeschwindigkeit,

    wobei der Messabschnitt (M) eine rechteckige Form, insbesondere mit abgerundeten Ecken, aufweist, **dadurch gekennzeichnet, dass** der Eingangsabschnitt (E) eine erste superelliptische Übergangsform und der Ausgangsabschnitt (A) eine zweite superelliptische Übergangsform aufweisen,

**wobei** die superelliptische Übergangsform mittels einer Formel

$$\left(\frac{x}{a_{(z)}}\right)^{n_{(z)}} + \left(\frac{y}{b_{(z)}}\right)^{n_{(z)}} = 1$$

beschrieben ist, wobei a(z) und b(z) Halbachsen der superelliptischen Übergangsform darstellen, wobei a(z), b(z) und n(z) Funktionen einer in die Hauptströmungsrichtung zeigenden Zählerachse z sind, und wobei sich die Werte von a(z), b(z) und n(z) kontinuierlich als Funktion der Zählerachse z ändern, um die superelliptische Form zu bilden.

2. Messvorrichtung (1) nach Anspruch 1, **dadurch gekennzeichnet, dass** die Messvorrichtung (1) in der kreisförmigen Leitung (L) koaxial zu der Hauptströmung des Fluids angeordnet ist.

3. Messvorrichtung (1) nach Anspruch 1 oder 2, **dadurch gekennzeichnet, dass** die Ultraschalleinrichtung (2) an der Wandung des rechteckigen Messabschnitts (M) derart angeordnet ist, dass zumindest ein Messpfad (2a) der Ultraschalleinrichtung (2) parallel zu einer Seitenwand des rechteckigen Messabschnitts (M) gerichtet ist.

4. Messvorrichtung (1) nach einem der vorhergehenden Ansprüche, **dadurch gekennzeichnet, dass** die Ultraschalleinrichtung (2) an der Wandung des rechteckigen Messabschnitts (M) derart angeordnet ist, dass sich eine sekante Messpfadausrichtung in dem rechteckigen Messabschnitt (M) ergibt.

5. Messvorrichtung (1) nach einem der vorhergehenden Ansprüche, **dadurch gekennzeichnet, dass** die erste superelliptische Übergangsform von einem runden Querschnitt (Q) auf einen rechteckigen Querschnitt (R) übergeht.

6. Messvorrichtung (1) nach einem der vorhergehenden Ansprüche, **dadurch gekennzeichnet, dass** die zweite superelliptische Übergangsform von einem rechteckigen Querschnitt (R) auf einen runden Querschnitt (Q) übergeht.

## Claims

1. A measuring device (1) for measuring a flow velocity of a fluid (F) flowing in a circular conduit (L) with a main flow direction, comprising:

    an input portion (E) for directing the fluid from the circular conduit (L) into the measuring device (1);

    an output portion (A) for directing the fluid from the measuring device (1) into the circular conduit (L);

a measuring portion (M) for connecting the input portion (E) to the output portion (A);

at least one ultrasonic device (2) for emitting and/or receiving ultrasonic waves, wherein the ultrasonic device (2) is arranged on a wall of the measuring portion (M); and

an evaluation unit for carrying out a transit time difference measurement and

for determining the flow rate, the measuring portion (M) having a rectangular shape, in particular with rounded corners,

**characterized in that** the input portion (E) has a first super-elliptical transition shape and the output portion (A) has a second super-elliptical transition shape,

**wherein** the super-elliptical transition shape is defined by means of a formula

$$\left(\frac{x}{a_{(z)}}\right)^{n_{(z)}} + \left(\frac{y}{b_{(z)}}\right)^{n_{(z)}} = 1$$

, wherein a(z) and b(z) represent half-axes of the superelliptic transition form, wherein a(z), b(z) and n(z) are functions of a counter axis z pointing in the main flow direction, and wherein the values of a(z), b(z), and n(z) change continuously as a function of the counter axis z to form the superelliptic form.

2. Measuring device (1) according to claim 1, **characterized in that** the measuring device (1) is arranged in the circular line (L) coaxially to the main flow of the fluid.

3. Measuring device (1) according to claim 1 or 2, **characterized in that** the ultrasonic device (2) is arranged on the wall of the rectangular measuring portion (M) in such a way that at least one measuring path (2a) of the ultrasonic device (2) is directed parallel to a side wall of the rectangular measuring portion (M).

4. Measuring device (1) according to one of the preceding claims, **characterized in that** the ultrasonic device (2) is arranged on the wall of the rectangular measuring portion (M) in such a way that a secant measuring path alignment results in the rectangular measuring portion (M).

5. Measuring device (1) according to one of the preceding claims, **characterized in that** the first super-elliptical transitional shape changes from a round cross-section (Q) to a rectangular cross-section (R).

6. Measuring device (1) according to one of the preceding claims, **characterized in that** the second super-elliptical transitional shape changes from a rectangular cross-section (R) to a round cross-section (Q).

## Revendications

1. Dispositif de mesure (1) pour mesurer la vitesse d'écoulement d'un fluide (F) s'écoulant dans un conduit circulaire (L) avec une direction d'écoulement principale, comprenant :

une partie d'entrée (E) pour diriger le fluide du conduit circulaire (L) vers le dispositif de mesure (1) ;

une partie de sortie (A) pour diriger le fluide du dispositif de mesure (1) dans le conduit circulaire (L) ;

une partie de mesure (M) pour connecter la partie d'entrée (E) à la partie de sortie (A) ;

au moins un dispositif à ultrasons (2) pour émettre et/ou recevoir des ondes ultrasonores, dans lequel le dispositif à ultrasons (2) est disposé sur une paroi de la partie de mesure (M) ; et

une unité d'évaluation pour effectuer une mesure de différence de temps de transit et pour déterminer le débit, la partie de mesure (M) ayant une forme rectangulaire, en particulier avec des coins arrondis,

**caractérisé en ce que** la partie d'entrée (E) a une première forme de transition super-elliptique et la partie de sortie (A) a une seconde forme de transition super-elliptique,

où la forme de transition super-elliptique est définie par une formule

$$\left(\frac{x}{a_{(z)}}\right)^{n_{(z)}} + \left(\frac{y}{b_{(z)}}\right)^{n_{(z)}} = 1$$

, où a(z) et b(z) représentent des demi-axes de la forme de transition superelliptique; où a(z), b(z) et n(z) sont fonctions d'un axe du compteur z orienté dans la direction principale du flux, et où les valeurs de a(z), b(z) et n(z) varient continuellement en fonction de l'axe du compteur z pour former la forme superelliptique.

2. Dispositif de mesure (1) selon la revendication 1, **caractérisé en ce que** le dispositif de mesure (1) est disposé dans la ligne circulaire (L) coaxialement au courant principal du fluide.

3. Dispositif de mesure (1) selon la revendication 1 ou 2, **caractérisé en ce que** le dispositif à ultrasons (2) est disposé sur la paroi de la partie de mesure rectangulaire (M) de telle sorte qu'au moins une voie de mesure (2a) du dispositif à ultrasons (2) est dirigée parallèlement à une paroi latérale de la partie de mesure rectangulaire (M).

4. Dispositif de mesure (1) selon l'une des revendications précédentes, **caractérisé en ce que** le dispositif à ultrasons (2) est disposé sur la paroi de la partie de mesure rectangulaire (M) de telle sorte qu'il en résulte un alignement sécant du trajet de mesure dans la partie de mesure rectangulaire (M).

5. Dispositif de mesure (1) selon l'une des revendications précédentes, **caractérisé en ce que** la première forme de transition super-elliptique passe d'une section ronde (Q) à une section rectangulaire (R).

6. Dispositif de mesure (1) selon l'une des revendications précédentes, **caractérisé en ce que** la deuxième forme de transition super-elliptique passe d'une section rectangulaire (R) à une section ronde (Q).

Fig. 1

Fig. 2

Fig. 3A

A-A

Q

E / A

Fig. 3B

B-B

R

E / A

Fig. 3C

C-C

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012111757 A1
- JP 2895704 B
- DE 19823165 A1